Europäisches Patentamt

European Patent Office

Office européen des brevets

(19)

(11) Veröffentlichungsnummer: **0 247 546**
**A1**

(12) # EUROPÄISCHE PATENTANMELDUNG

(21) Anmeldenummer: **87107518.0**

(22) Anmeldetag: **23.05.87**

(51) Int. Cl.⁴: **B65B 51/04 , A22C 11/12**

(30) Priorität: **24.05.86 DE 3617557**

(43) Veröffentlichungstag der Anmeldung:
**02.12.87 Patentblatt 87/49**

(84) Benannte Vertragsstaaten:
**AT BE CH DE ES FR GB GR IT LI NL SE**

(71) Anmelder: **Kollross, Günter**
**Am Wallerstädter Weg 20**
**D-6080 Gross Gerau-Dornheim(DE)**

(72) Erfinder: **Kollross, Günter**
**Am Wallerstädter Weg 20**
**D-6080 Gross Gerau-Dornheim(DE)**

(74) Vertreter: **Beyer, Werner, Dipl.-Ing.**
**Patentanwälte Werner Beyer Bernd Jochem**
**Staufenstrasse 36**
**D-6000 Frankfurt/Main(DE)**

(54) Verfahren zum Verschliessen schlauchförmiger Verpackungen, insbesondere Wursthüllen, durch U-förmige Verschlussklammern sowie Vorratsbehälter und Vorrichtung hierfür.

(57) Verfahren zum Verschließen schlauchförmiger Verpackungen, insbesondere Wursthüllen, durch U-förmige Verschlußklammern (2), welche reihenförmig zu einem Riegel (4) zusammengefaßt, von diesem in einer Schließeinrichtung nacheinander abgenommen und dort unter plastischer Verformung um die jeweils an den Verschlußstellen zusammengeschnürte - schlauchförmige Verpackung gebogen werden. Es ist vorgesehen, daß die Klammerriegel aus einem Vorrat, in welchem sie in einer ersten Stellung und in einer um 180° zu dieser gedrehten zweiten Stellung abwechselnd parallel zueinander angeordnet sind, durch eine erste Vorschubkraft an eine Wendeeinrichtung (30) herangeführt und dort im Falle der ersten Stellung hindurchgeführt und im Falle der zweiten Stellung um 180° gewendet werden, um anschliessend in beiden Fällen durch eine zweite Vorschubkraft zu der Schließeinrichtung gefördert zu werden.

Fig. 2

EP 0 247 546 A1

Die Erfindung betrifft ein Verfahren zum Verschließen schlauchförmiger Verpackungen, insbesondere Wursthüllen, durch U-förmige Verschlußklammern, welche reihenförmig in einem Vorrat zu parallel zueinander angeordneten Riegeln zusammengefaßt sind, wobei die Riegel durch eine erste Vorschubkraft aus dem Vorrat heraus und durch eine zweite Vorschubkraft zu einer Schließeinrichtung gefördert werden, in welcher die Klammern nacheinander von den Riegeln abgenommen und dort unter plastischer Verformung um die jeweils an den Verschlußstellen zusammengeschnürte schlauchförmige Verpackung gebogen werden.

Es sind mehrere Verfahren der Magazinierung und Zuführung der Verschlußklammern bei der Wurstherstellung bekannt. In einfachster Ausführung werden einige wenige Riegel, d. h. durch Klebeband reihenförmig zusammengehaltene Verschlußklammern in einer Anzahl von jeweils etwa 50 bis 100 Stück, in Längsrichtung übereinander auf eine aufrechte Führungsstange, die sie zur Schließeinrichtung führt, aufgereiht und durch ein mit ihnen längs der Führungsstange herabgleitendes Gewicht beschwert. Üblicherweise nimmt solch eine Führungsstange nur etwa 200 bis 400 Verschlußklammern auf, die bei einer Taktfrequenz von etwa 60 bis 100 Schließvorgängen pro Minute sehr schnell aufgebraucht sind. Es ist deshalb ständig eine Bedienungsperson mit dem Nachfüllen beschäftigt.

Ein anderes bekanntes Verfahren (US-PS 3 748 717) arbeitet mit einem Revolver mit axialen Nuten zur Aufnahme jeweils eines Riegels der Verschlußklammern. Der Revolver ist im Verhältnis zur Zahl der magazinierten Verschlußklammern ein voluminöses, teures Bauteil, das Nachladen beansprucht ebenfalls viel Arbeitszeit, und schließlich besteht der Nachteil, daß beim Weiterschalten des Revolvers verhältnismäßig lange Unterbrechungen des angestrebten gleichmäßigen Nachschubs von Verschlußklammern eintreten.

Ein weiteres bekanntes Verfahren verwendet eine spiralig gewickelte Schlange nebeneinander an einem Klebeband festgeklebter Verschlußklammern. Gemeinsam mit dem zuvor geschilderten Stand der Technik hat es den Nachteil, daß die Verschlußklammern während des Betriebes der Schließeinrichtung ungeschützt freiliegen, mit Wurstbrät verschmutzt werden und beim Säubern mit Wasser und Druckluft teilweise vom Klebeband gelöst werden können. Aus diesem Grunde sowie auch wegen der gekrümmten Führungsbahn, bei der die Verschlußklammern zum gegenseitigen Verklemmen neigen, und weil es zu Rissen des auf Zug beanspruchten Klebebandes kommen kann, sind Funktionsstörungen verhältnismäßig häufig.

Es ist auch bekannt, eine sehr große Anzahl von Verschlußklammern, die noch mit ihren Enden verbunden sind, da das drahtförmige Ausgangsmaterial nicht vollständig durchtrennt wurde, ähnlich wie eine Drahtvorratsrolle als Magazin bereitzustellen. In diesem Fall ergeben sich Probleme daraus, daß sich die Verschlußklammern unter den im aufgewickelten Zustand auftretenden Belastungen verformen können und dann nicht richtig in die Schließeinrichtung einlaufen. Außerdem ist dort zusätzlich ein Messer erforderlich, und es besteht ebenfalls wieder der Gefahr, daß die magazinierten Verschlußklammern neben der Schließeinrichtung stark verschmutzen.

Schließlich ist eine Vorrichtung bekannt (AT-PS 330 003), bei der die Klammern in einem Behälter in Form von Klammerreihen parallel übereinander und gleich ausgerichtet gestapelt angeordnet sind. Aus diesem Behälter werden sie durch eine erste Vorschubkraft herabgeführt, um anschließend durch eine zweite Vorschubkraft zu einer Schließeinrichtung gefördert zu werden. Die Anordnung der Klammern gleichsinnig parallel übereinander hat ein großes ungenutztes Volumen in dem Behälter zur Folge, so daß für eine ausreichende und kontinuierliche Versorgung der Schließeinrichtung mit Klammern entweder die Behälter sehr groß sein müssen oder aber häufig gewechselt werden müssen.

Aus der beschriebenen Situation ist erkennbar, daß sich die verschiedenen Forderungen nach einer optimalen Bevorratung der Verschlußklammern zu widersprechen scheinen. Soll die Menge an Klammern im Vorrat erhöht werden, um die Anzahl der Nachfüllvorgänge und damit den hierfür notwendigen Arbeitsaufwand zu reduzieren, so wächst bei dem bisherigen Stand der Technik die Gefahr von Funktionsstörungen infolge größerer Kräfte und gegenseitiger Verklemmung. Darüberhinaus läßt sich das so vergrößerte Magazin nur schwer handhaben. Andererseits behindert ein besserer Schutz gegen das Verschmutzen der Klammern den Nachfüllvorgang.

Es ist deshalb Aufgabe der Erfindung, ein Verfahren der eingangs genannten Art und zu dessen Durchführung geeignete Vorrichtung sowie einen Vorratsbehälter für die Verschlußklammern zu - schaffen, welche die genannten Widersprüche und die Nachteile überwinden, d. h. die Anzahl der Nachfüllvorgänge verringern, einen kontinuierlichen Nachschub, auch im Falle des Nachfüllens, an Verschlußklammern zu der Schließeinrichtung gewährleisten, die Verschlußklammern gegen Verschmutzen schützen und dies durch einfache, wenig Platz beanspruchende Vorrichtungen erreichen.

Vorstehende Aufgabe wird nach der Erfindung verfahrensgemäß dadurch gelöst, daß die Klammerriegel in dem Vorrat in der ersten Stellung und in einer um 180° zu dieser gedrehten zweiten Stellung abwechselnd parallel zueinander angeordnet sind, durch die erste Vorschubkraft an eine zwischen Vorrat und Schließeinrichtung angeordneten Wendeeinrichtung herangeführt und dort im Falle der ersten Stellung hindurchgeführt und im Falle der zweiten Stellung um 180° gewendet werden.

Die Erfindung ermöglicht, daß eine große Anzahl an Verschlußklammern auf einen relativ kleinen Raum zusammengefaßt werden können, so daß nur in großen Zeitabständen der Vorrat an Klammern ergänzt werden muß und somit wertvolle Arbeitszeit ein gespart wird. Darüber hinaus ermöglicht das Verfahren einen kontinuierlichen Nachschub, auch im Falle des Nachfüllens, an Verschlußklammern zu der Schließeinrichtung.

In bevorzugter Ausgestaltung der Erfindung ist jeweils ein Klammerriegel in erster Stellung mit einem in ihn eingreifenden Klammerriegel in zweiter Stellung paarweise im Vorrat zusammengefaßt. Hierdurch die die größtmögliche Packungsdichte in einem Behälter gegebener Größe erreicht.

Weiterhin werden in bevorzugter Ausgestaltung der Erfindung die erste, die zweite und die dritte Vorschubkraft zumindest teilweise durch das Eigengewicht der Verschlußklammern erzeugt. Hierdurch werden ein einfacher Aufbau und eine sichere Zuführung bzw. ein Bewegungsablauf gewährleistet. Darüberhinaus können die bei einer motorisch erzeugten Kraft zusätzlichen Teile eingespart werden.

In weiterer bevorzugter Ausgestaltung der Erfindung werden die Klammerriegel ohne Unterbrechung nacheinander zu der Schließeinrichtung durch die zweite Vorschubkraft gefördert. Dadurch werden die durch die schrittweise Zuführung der Klammerriegel an die Wendevorrichtung entstandenen Lücken ausgeglichen, so daß die Riegel der Schließeinrichtung kontinuierlich zugeführt werden.

Bevorzugt kommt zur Durchführung dieses Verfahrens ein Vorratsbehälter für die Verschlußklammern zur Anwendung, der aus einem transportablen Gehäuse mit paralleln Seitenwänden besteht, deren Abstand zueinander mindestens der Breite und zusätzlich der Drahtstärke einer U-förmigen Klammer entspricht, wobei diese Seitenwände im Bereich der Austrittsöffnung zwei nach außen durch geeignete Mittel wegklappbare Laschen besitzen, deren freie Endkanten mit jeweils einer Abschrägung versehen sind, und die Laschen an ihren Innenseiten Stützflächen besitzen, auf denen der erste Klammerriegel während des Transportes aufliegt.

Durch die erfindungsgemäße Ausbildung des Vorratsbehälters wird erreicht, daß das nachfüllbare Magazin durch eine insgesamt auswechselbare, vorzugsweise geschlossene Packungseinheit ersetzt werden kann. Neben der bereits oben erwähnten Arbeitszeitersparnis aufgrund der großen Anzahl an Verschlußklammern wird hierdurch der Nachfüllvorgang an sich verkürzt, da nur der leere Behälter abgenommen und ein gefüllter aufgesetzt werden muß. Durch die erfindungsgemäße Ausbildung der Laschen wird dieses zusätzlich unterstützt. Die Breite des Gehäuses des Vorratsbehälters sichert weiterhin, daß die Klammerriegel im Gehäuse ausreichend geführt sind. Darüberhinaus schützt das geschlossene Gehäuse die Klammern gegen Verschmutzung, so daß ihre Funktionsfähigkeit gewährleistet bleibt. Außerdem lassen sich die Vorratsbehälter in einfacher Weise und raumsparend zwischenlagern.

In bevorzugter Ausgestaltung des Vorratsbehälters sind die Laschen so ausgebildet, daß der Vorratsbehälter nur einmal verwendbar ist. Der Behälter kann somit aus einfachen und billigen Materialien hergestellt werden. Außerdem können die Scharniere für die wegklappbaren Laschen konstruktiv einfach ausgeführt werden, da sie nur zweimal (beim Füllen und beim Entleeren) in Funktion treten müssen.

Eine erfindungsgemäße Vorrichtung zur Durchführung des neuen Verfahrens ist dadurch gekennzeichnet, daß sich zwischen dem Vorratsbehälter und der Schließeinrichtung eine Wendeeinrichtung befindet, deren Einlaßöffnung unmittelbar an die Austrittsöffnung des Vorratsbehälters anschließt und sich an deren Auslaßöffnung ein Stetigförderer befindet, der die durch die Wendeeinrichtung geführten Klammerriegel zu der Schließeinrichtung fördert, und daß sich jeweils an den beiden Stirnseiten des Vorratsbehälters im Bereich dessen Austrittsöffnung Stellmittel befinden, die die Klammerriegel im Vorratsbehälter zurückhalten und diese in Abhängigkeit der Stellung der Wendeeinrichtung einzeln für eine Zuführung zu dieser Wendeeinrichtung freigeben.

Die erfindungsgemäße Ausbildung der Vorrichtung ermöglicht, daß die in den Vorratsbehältern in größtmöglicher Packungsdichte angeordneten Klammerriegel in einfacher und funktionssicherer Weise je nach ihrer Lage im Behälter in richtiger Position zu der Schließeinrichtung gelangen. Durch die Stellmittel wird dabei sichergestellt, daß immer nur ein Klammerriegel an die Wendeeinrichtung herangeführt wird.

In bevorzugter Ausgestaltung der Vorrichtung besteht die Wendeeinrichtung aus einem die Ein- und Auslaßöffnungen enthaltenden gehäuseartigen Körper und in einer Bohrung des Körpers gelagerten und zwischen ihren Enden diametral geschlitzten Walze, die auf ihrer Mantelfläche zwei diametral gegenüberliegende Aufnahmen besitzt, deren Länge und Breite ebenso wie der durchgehende Schlitz der Länge und Breite eines Klammerriegels entspricht. Die Wendeeinrichtung hat somit, neben der einfachen Funktionsweise den Vorteil, daß sie als Zwischenspeicher für die Klammerriegel dient, so daß auch während des Auswechselns des Vorratsbehälters ein fortlaufender Betrieb möglich ist.

Weiterhin befinden sich in bevorzugter Ausgestaltung der Erfindung an der Einlaßöffnung der Wendeeinrichtung zwei beiderseitig von dieser Öffnung angebrachte nach außen verlaufende Abschrägungen, die in einem solchen Abstand zueinander angebracht sind, daß beim Aufsetzen des Vorratsbehälters dessen Laschen nach außen geklappt werden. Hierdurch wird erreicht, daß die Laschen des Vorratsbehälters beim Aufsetzen auf die Vorrichtung selbständig wegklappen und so nur eine Hand für diese Tätigkeit notwendig ist. Außerdem wird der Behälter auf der Einlaßöffnung zentriert.

In weiterer bevorzugter Ausgestaltung der Vorrichtung bestehen die Stellmittel an jeder Stirnseite des Vorratsbehälters aus jeweils zwei auf Achsen gelagerten hakenförmigen Armen, die über ein druckluftgesteuertes Gestänge mit dem korrespondierenden Arm der gegenüberliegenden Seite verbunden sind. Durch diese Ausbildung der Stellmittel wird erreicht, daß der jeweilige Klammerriegel auf beiden Seiten gleichzeitig freigegeben wird, so daß er sich nicht in der Einlaßöffnung bzw. in der Wendeeinrichtung selbst verklemmen kann.

Die Erfindung wird nachstehend anhand der Zeichnungsfiguren näher erläutert. Es zeigen:

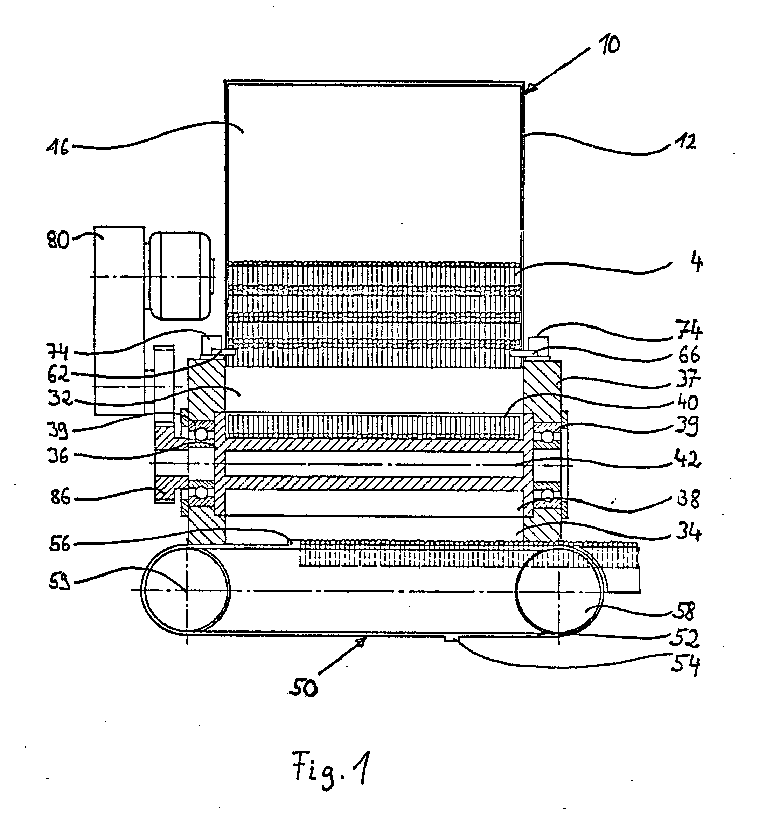

Fig. 1 eine Seitenansicht einer erfindungsgemäßen Vorrichtung mit einer Wendeeinrichtung und einem an diese angeschlossenen Vorratsbehälter,

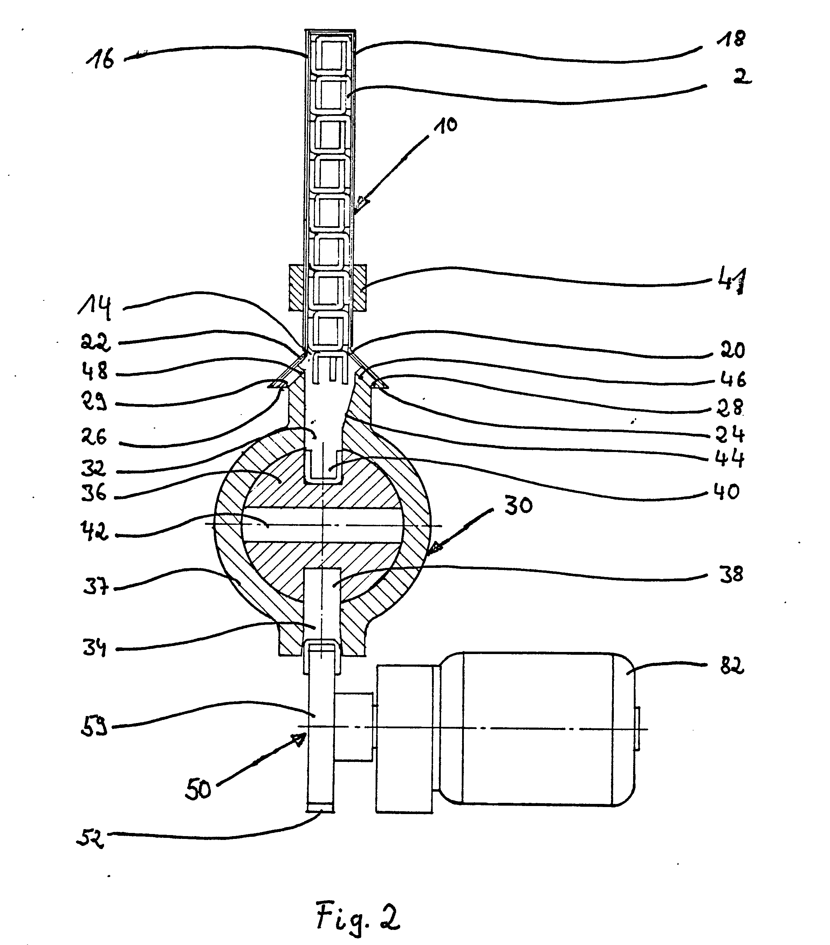

Fig. 2 einen Querschnitt durch die in Fig. 1 gezeigte Vorrichtung,

Fig. 3 eine Ansicht schräg von der Seite auf den geschlossenen Vorratsbehälter,

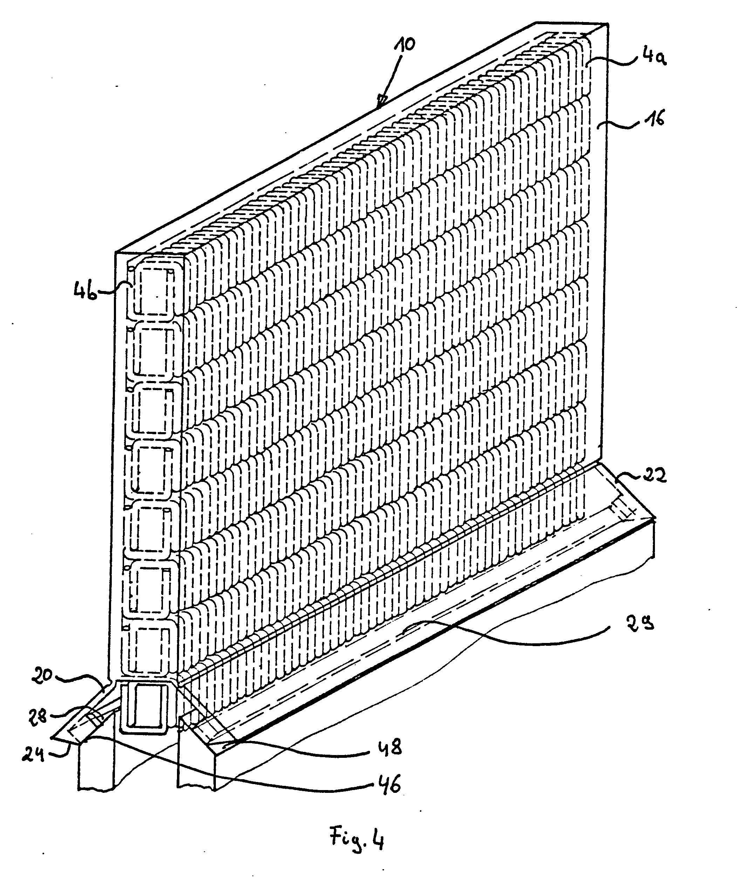

Fig. 4 eine Ansicht schräg von der Seite auf den geöffneten Vorratsbehälter,

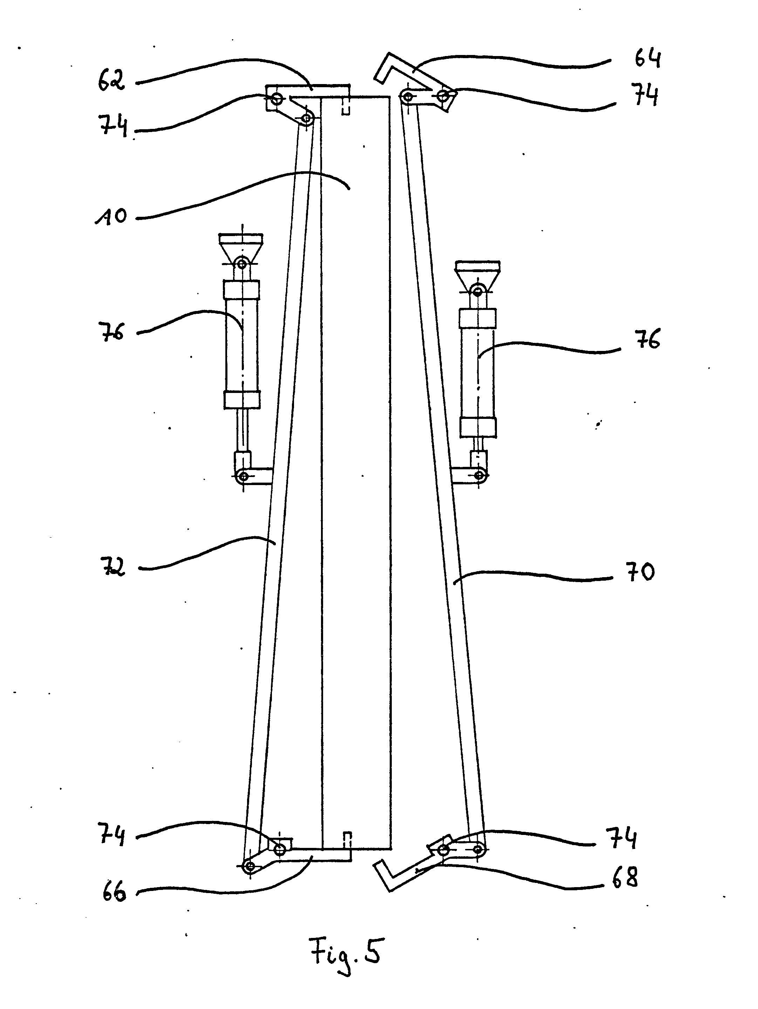

Fig. 5 eine Draufsicht auf die Vorrichtung gemäß Fig. 1,

Fig. 6a, b, c, d einen Teilquerschnitt durch den Vorratsbehälter mit Darstellung der einzelnen Positionen der Stellmittel.

Die Vorrichtung besteht in ihren Hauptteilen aus einem Vorratsbehälter 10 für die Verschlußklammern 2, einer Wendeeinrichtung 30, Stellmitteln 62, 64, 66, 68, 70, 74, 76, einem Stetigförderer 50 und einer nicht gezeigten Schließeinrichtung, die in bekannter Weise die einzelnen Klammern 2 um die zusammengeschnürten Wursthüllen herum verformt.

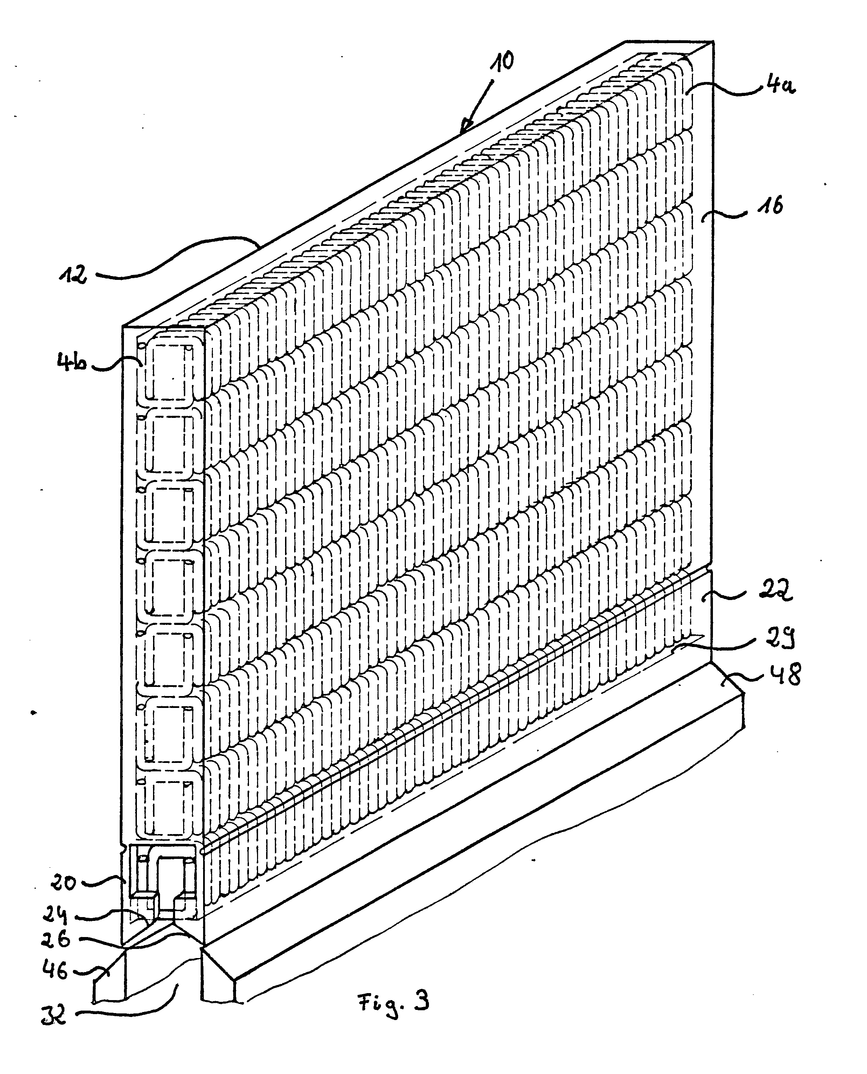

Der Vorratsbehälter 10 für die Verschlußklammern 2 besteht aus einem flachen kastenförmigen Gehäuse 12, das mittels eines am Rahmen oder an einem anderen Teil der Vorrichtung angebrachten Halters 41 in einer bestimmten Lage relativ zur Wendeeinrichtung 30 fest verspannt werden kann. Das flache Gehäuse 12 besteht vorzugsweise aus Kunststoff oder Metallblech. Seine Innenhöhe entspricht, wie Fig. 3 zeigt, der Breite und zusätzlich der Drahtstärke einer U-förmigen Klammer 2. Im Gehäuse 12 sind die Verschlußklammern 2 mittels eines oder mehrerer Klebebänder zu Riegeln 4 zusammengesetzt. Jeder Klammerriegel 4 kann z. B. 50 bis 100 Verschlußklammern 2 umfassen, und das Gehäuse 12 kann z. B. 20 bis 40 Riegel 4 enthalten. Selbstverständlich können diese Zahlen nach oben oder unten abweichen. Das an sich bekannte Verbinden der Verschlußklammern 2 mittels Klebeband zu Klammerriegeln 4 hat für die Erfindung insofern Bedeutung, als dadurch das Einsetzen der Klammern 2 in das Gehäuse 12 erleichtert wird, durch die gegenseitige Mitnahme der Klammern 2 das gleichmäßige Nachrutschen der Riegel 4 von oben nach unten im Gehäuse 12 gefördert und gegebenenfalls durch geeignete Materialauswahl die Reibung günstig beeinflußt werden kann.

Die Klammerriegel 4 sind im Vorratsbehälter 10 abwechselnd in einer ersten Stellung 4a und in einer dazu um 180° gedrehten zweiten Stellung 4b angeordnet, wobei der Klammerriegel in zweiter Stellung 4b mit einer seiner beiden aus den Schenkeln der einzelnen Klammern 2 gebildeten Flanke in den Innenraum des Klammerriegels in erster Stellung 4a eingreift.Die erste Stellung entspricht hierbei der Verarbeitungsrichtung der Klammern 2. Hierdurch werden immer zwei Riegel 4 paarweise zusammengefaßt. Da alle Paare in gleicher Weise, d.h. alle Klammerriegel in zweiter Stellung 4b entweder mit ihrer linken oder aber alle mit ihrer rechten Flanke in den Innenraum der Riegel in erster Stellung 4a eingreifen, liegen alle Paare mit jeweils zwei Flanken an den Seitenwänden 16, 18 des Gehäuses 12 an, so daß sie durch diese geführt werden.

Die einzelnen Klammerriegel 4 sind, wie aus Fig. 3 hervorgeht, liegend übereinander angeordnet und in ihrer Länge gleich, wobei die Länge genau der Innenbreite des Gehäuses 12 entspricht.

Es ist im Hinblick auf die Erfindung unerheblich, ob und wie das Gehäuse 12 geteilt ist, um das Einlegen der Klammerriegel 4 zu erleichtern, und wie die Gehäuseteile miteinander verbunden sind, z. B. verrastet oder verschweißt sind. Da der Behälter 10 nach der Leerung aus der Halterung 41 genommen bzw. von der Wendeeinrichtung 30 abgenommen und durch einen vollen Behälter 10 ersetzt wird, kommt es lediglich darauf an, daß im Gehäuse 12 eine Austrittsöffnung vorhanden ist. Bei der beschriebenen Ausführung ist zu diesem Zweck diejenige Schmalseite des Gehäuses 12, die im eingespannten Zustand den Boden des Vorratsbehälters 10 bildet, mit einer über die gesamte Länge reichende Öffnung 14 versehen, durch die die Klammerriegel 4 in die Wendevorrichtung 30 gelangen können. Diese Austrittsöffnung 14 wird durch zwei durch geeignete Mittel nach außen wegklappbare Laschen 20, 22 begrenzt, die aus den Seitenwänden 16, 18 des Gehäuses 12 hervorgehen. Die Scharniere für diese beiden wegklappbaren Laschen 20, 22 werden in einfacher Weise durch eine linienförmige Materialschwächung erzeugt, die sich über die gesamte Länge der Seitenflächen 16, 18 erstreckt. An den freien Enden der Laschen 20, 22 sind jeweils zwei sich über deren gesamte Länge erstreckende nach innen weisende Abschrägungen 24, 26 angebracht, die mit zwei in entgegengesetzter Richtung weisende Abschrägungen 46, 48 der Wendevorrichtung 30 zusammenwirken. In der Verlängerung der Stirnseiten des Vorratsbehälters 10 besitzen die Laschen 20, 22 Aussparungen, die den Stellmitteln 62, 64, 66, 68 ermöglichen, noch vor dem Wegklappen der Laschen 20, 22 in das Gehäuse 12 des Vorratsbehälters 10 einzuschwenken. Auf den Innenseiten der Laschen 20, 22 befinden sich jeweils zwei an ihren Stirnseiten begrenzte Stützflächen 28, 29, die die Aufgabe haben, im geschlossenen Zustand des Behälters 10 die Klammerriegel 4 am Herausfallen sowohl nach unten als auch zu den beiden Stirnseiten des Gehäuses 12 zu hindern.

Die Wendeeinrichtung 30 besteht aus einer in einem rohrförmigen Körper 37 mit zwei Rillenkugellagern 39 drehbar gelagerten Walze 36. Der Antrieb für die Drehbewegung erfolgt über ein an der Walze 36 außerhalb des Körpers 37 angebrachtes Zahnrad 86, das im Eingriff mit einem Schrittschaltantrieb 80 steht.

Die Walze 36 weist zwischen ihren Enden einen diametral durchgehenden Schlitz 42 und um 90° versetzt zu diesen auf ihrer Mantelfläche zwei diametral gegenüberliegende Aufnahmen 38, 40 auf. Die Länge und Breite des Schlitzes 42 sowie der Aufnahme 38, 40 entspricht der Länge und Breite eines Klammerriegels 4.

Auf der Außenseite des rohrförmigen Körpers 37 sind zwei diametral gegenüberliegende, nach außen weisende Fortsätze angebracht, in deren Mitte sich zwei Öffnungen 32, 34 befinden, die als Einlaßöffnung 32 bzw. Auslaßöffnung 34 für die Wendevorrichtung 30 dienen. Die Länge und Breite dieser Öffnungen 32, 34 entspricht dabei ebenfalls der Länge und Breite eines Klammerriegels 4. Die Einlaßöffnung 32 besitzt an einer der beiden Innenflanken eine zur Walze 36 hinweisende Abschrägung 44, die das Einführen der Klammerriegel 4 aus dem Vorratsbehälter 10 in die Wendeeinrichtung 30 erleichtert. An den freien Endkanten des die Einlaßöffnung 32 aufweisenden Fortsatzes sind beiderseitig der Öffnung 32 zwei nach außen weisende Abschrägungen 46, 48 angebracht, die mit den Abschrägungen 24, 26 der wegklappbaren Laschen 20, 22 des Vorratsbehälters 10 zusammenwirken.

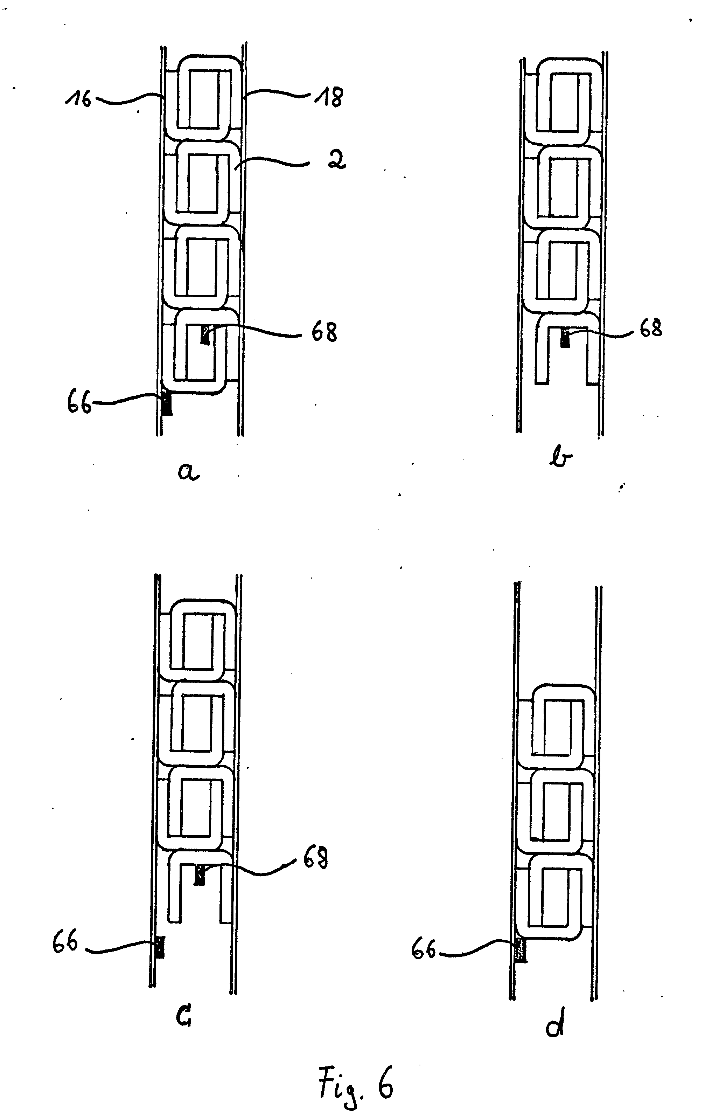

Ebenfalls auf diesen Fortsatz sind jeweils beiderseitig der Stirnseite der Öffnung 32 paarweise vier Achsen 74 angebracht, auf denen schwenkbar die hakenförmigen Arme 62, 64, 66, 68 befestigt sind. Auf jeder Stirnseite ist jeweils einer der beiden Arme für das Halten bzw. die Freigabe eines in Abhängigkeit seiner Stellung bestimmten Klammerriegels 4 vorgesehen, so daß jeweils ein Arm der einen Stirnseite mit einem Arm der anderen Stirnseite in seiner Tätigkeit korrespondiert, d. h., daß jeweils zwei Arme auf verschiedenen Seiten bezüglich der Stellung der Riegel 4 die gleiche Aufgabe haben. Sie sind deshalb mit jeweils einen durch einen Druckluftzylinder 76 angetriebenes Gestänge 70, 72 miteinander verbunden, so daß ein gleichzeitiges Halten bzw. Freigeben der Arme 62, 64, 66, 68 gewährleistet ist. Fig. 6a, b, c, d zeigt die Wirkungsweise dieser Stellmittel 62, 64, 66, 68, 70, 72, 74, 76) anhand eines Schnittes durch die Stirnseite des Vorratsbehälters 10. Fig. 6a verdeutlicht, daß die Arme 66, 68 (bzw. 62, 64) sowohl die Klammerriegel in erster Stellung 4a als auch in zweiter Stellung 4b zurückhalten. Durch ein entsprechendes Steuersignal eines Signalgebers, das von der Schließeinrichtung ausgeht, wird der Arm 66 (bzw. 62) weggeschwenkt und der Riegel in Stellung 2 kann durch die Austrittsöffnung 14 des Vorratsbehälters 10 in die Einlaßöffnung 32 der Wendeeinrichtung 30 fallen. Der Riegel in Stellung 1 wird noch, wie in Fig. 6b gezeigt, durch den Arm 68 (bzw. 64) gehalten. Nachdem der Riegel in zweiter Stellung aus dem Vorratsbehälter 10 herausgefördert worden ist, wird der Arm 66 (bzw. 62) wieder eingeschwenkt. Dies ist in Fig. 6c dargestellt. Anschließend gibt, wie Fig. 6d zeigt, der Arm 68 (bzw. 64) den Klammerriegel in erster Stellung 4a frei, so daß die im Vorratsbehälter 10 verbliebenen Riegel 4 bis zu dem Arm 66 (bzw. 62) nachrutschen können. Anschließend wird der Arm 68 (bzw. 64) wieder eingeschwenkt, so daß die in Fig. 6a dargestellte Ausgangssituation wieder erhalten wird.

An die Auslaßöffnung 34 der Wendeeinrichtung 30 schließt sich unmittelbar der Stetigförderer 50 an, der aus einem mit zwei Mitnehmern 54, 56 versehenen endlosen Flachriemen 52, einer Umlenkrolle 58 und einer mit einem druckluftbetriebenen Motor 82 verbundenen Antriebsrolle 59 besteht. Der Abstand der beiden Mitnehmer 54, 56, die neben ihrer Aufgabe, die aus der Wendeeinrichtungg 30 kommenden Klammerriegel 4 zu der Schließeinrichtung zu fördern, auch eine Rückwärtsbewegung gegen die Förderrichtung verhindern sollen, entspricht der Länge eines Klammerriegels 4. Anstelle des Flachriemens 52 kann hier auch jede andere Riemenart, die ebenfalls über Mitnehmer oder aber über Reibschluß die Klammerriegel 4 fördert, verwendet werden.

Neben der motorisch erzeugten Förderkraft besteht auch die Möglichkeit, die Klammerriegel 4 allein durch ihr Eigengewicht zu der Schließeinrichtung zu fördern, indem an die Stelle des Stetigförderers 50 eine nicht gezeigte, mit entsprechenden Führungsmitteln ausgestattete schiefe Ebene tritt, an der die Riegel 4, nachdem sie aus der Wendeeinrichtung 30 herausgetreten sind, nach unten zur Schließeinrichtung gleiten können.

Der druckluftbetriebene Motor 82 ist so ausgelegt, daß er während des Fördervorganges durch die Klammerriegel 4 gebremst wird. Hat ein Klammerriegel 4 gerade den endlosen Flachriemen 52 in Richtung der Schließeinrichtung verlassen, so beschleunigt der Motor aufgrund der geringeren Last kurzzeitig, so daß der nachfolgende Klammerriegel 4 sich unmittelbar an seinen Vorgänger anschließt.

Nachdem die Bestandteile der Vorrichtung beschrieben worden sind, soll das Verfahren bzw. die Vorgehensweise innerhalb des Verfahrens erläutert werden.

Der Vorratsbehälter 10 mit den abwechselnd paarweise in erster und zweiter Stellung 4a, 4b angeordneten Klammerriegel 4 wird von oben auf die Wendeeinrichtung 30 aufgesetzt, wobei der Halter 41 ein Wegkippen des Behälters 10 verhindert. Sobald der Behälter 10 die Abschrägungen 46, 48 der Einlaßöffnung 32 der Wendeeinrichtung 30 mit seinen Laschen 20, 22 erreicht hat, werden die hakenförmigen Arme 62, 64, 66, 68 eingeschwenkt und unter den ersten bzw. zweiten Klammerriegel eingeführt. Anschließend kann der Vorratsbehälter 10 weiter heruntergeführt werden, so daß seine Laschen 20, 22 durch die Abschrägungen 46, 48 der Einlaßöffnung 32 nach außen weggeklappt werden. Die Walze 36 wird danach in ihre Ausgangsposition gebracht, die von der Stellung des ersten Klammerriegels abhängt. Befindet sich der erste Riegel in Stellung 4a, so ist der durchgehende Schlitz 42 der Walze 36 unter der Einlaßöffnung 32. Wird dieser erste Riegel von den beiden hakenförmigen Armen 64, 68 freigegeben, so fällt er aufgrund seines Eigengewichtes durch die Einlaßöffnung 32, den Schlitz 42 und der Auslaßöffnung 34 der Wendeeinrichtung 30 auf den Stetigförderer 50 und wird von diesem zur Schließeinrichtung gefördert. Die im Vorratsbehälter 10 verbliebenen Klammerriegel 4 rutschen aufgrund ihres Eigengewichtes so weit nach, bis sie von den beiden anderen korrespondierenden hakenförmigen Armen 62, 66 in ihrer Bewegung gestoppt werden. Befindet sich dagegen der erste Klammerriegel in zweiter Stellung 4b, so ist eine der beiden Aufnahmen 38, 40 der Walze 36 unter der Einlaßöffnung 32. Nachdem die beiden hakenförmigen Arme 62, 66 diesen freigegeben haben, fällt er aufgrund seines Eigengewichtes in die jeweilige Aufnahme. Anschließend schaltet der Antrieb 80 die Walze 36 um eine Vierteldrehung weiter, so daß der durchgehende Schlitz 42 unter der Einlaßöffnung 32 zum Stehen kommt. Nun geben die beiden anderen korrespondierenden hakenförmigen Arme 64, 68 den zu diesem Paar gehörenden Klammerriegel in erster Stellung 4a frei, der in der oben beschriebenen Weise durch die Wendeeinrichtung 30 direkt auf den Stetigförderer 50 fällt und von diesem ebenfalls zur Schließeinrichtung gefördert wird. Daraufhin schaltet der Antrieb 80 die Walze 36 wiederum um eine Vierteldrehung weiter, so daß der in der Aufnahme befindliche Riegel auf den Stetigförderer 50 fallen kann. Es versteht sich hierbei von selbst, daß dieser Schaltvorgang erst dann erfolgt, wenn der zuvor unter der Auslaßöffnung 34 befindliche Klammerriegel von dem Stetigförderer 50 so weit weitergefördert worden ist, daß dieser Riegel den in der Aufnahme befindlichen Riegel nicht behindert. In dieser Stellung der Walze 36 geben die beiden korrespondierenden Arme 62, 66 den nächsten Klammerriegel in zweiter Stellung frei, so daß sich der Vorgang wiederholt.

Neben der hier beschriebenen Ausführungsform der Erfindung sind noch weitere Formen möglich, die im folgenden kurz ohne entsprechende Zeichnungsfigur geschildert werden sollen.

Es ist denkbar, den Vorratsbehälter 10 nicht senkrecht von oben auf der Wendeeinrichtung 30 anzubringen, sondern schräg von oben oder aber seitlich zu der Wendeeinrichtung 30. Im letzten Fall müßte hierzu der Vorratsbehälter 10 statt einer Austrittsöffnung 14 am Boden zwei Öffnungen an jeweils beiden Stirnseiten besitzen, so daß ein beispielsweise druckluftangetriebener Schieber die einzelnen Klammerriegel 4 aus dem Behälter 10 zu der Wendeeinrichtung 30 fördern kann. Dabei wäre es möglich, ein Gewicht zusätzlich auf den obersten der Riegel aufzulegen, um das Nachrutschen der Klammerriegel zu verbessern. Weiterhin könnte der Vorratsbehälter 10 mit einem Fenster in der Nähe der Austrittsöffnung 14 bzw. der beiden Öffnungen an der Stirnseite des Behälters 10 versehen werden, so daß jederzeit erkennbar ist, wie weit der Behälter 10 entleert ist.

Statt einer Walze 36 ist es denkbar, in der Wendeeinrichtung 30 zwei Bahnen vorzusehen, wobei die eine dem Schlitz 42 entspricht und die andere einen Halbkreis beschreibt. Beide Bahnen beginnen und enden an der Einlaßöffnung 32 bzw. Auslaßöffnung 34. Durch einen ebenfalls druckluftangetriebenen Schieber, der ähnlich einer Weiche die eine oder andere Bahn freigibt, können die einzelnen Klammerriegel 4 je nach ihrer Stellung im Behälter 10 in die eine oder andere Bahn gelenkt werden.

Selbstverständlich lassen sich die hier erwähnten Möglichkeiten mit der beschriebenen Ausführungsform einzeln kombinieren.

## Ansprüche

1. Verfahren zum Verschließen schlauchförmiger Verpackungen, insbesondere Wursthüllen, durch U-förmige Verschlußklammern, welche reihenförmig in einem Vorrat zu parallel zueinander angeordneten Riegeln zusammengefaßt sind, wobei die Riegel durch eine erste Vorschubkraft aus dem Vorrat heraus und durch eine zweite Vorschubkraft zu einer Schließeinrichtung gefördert werden, in welcher die Klammern nacheinander von den Riegeln abgenommen und dort unter plastischer Verformung um die jeweils an den Verschlußstellen zusammengeschnürte schlauchförmige Verpakkung gebogen werden, **dadurch gekennzeichnet, daß** die Klammerriegel in dem Vorrat in der ersten Stellung und in einer um 180° zu dieser gedrehten zweiten Stellung abwechselnd parallel zueinander angeordnet sind, durch die erste Vorschubkraft an eine zwischen Vorrat und Schließeinrichtung angeordneten Wendeeinrichtung herangeführt und dort im Falle der ersten Stellung hindurchgeführt und im Falle der zweiten Stellung um 180° gewendet werden.

2. Verfahren nach Anspruch 1 , **dadurch gekennzeichnet, daß** jeweils ein Klammerriegel in erster Stellung mit einem in ihn eingreifenden Klammerriegel in zweiter Stellung paarweise im Vorrat zusammengefaßt ist.

3. Verfahren nach Anspruch 2 , **dadurch gekennzeichnet, daß** die erste Vorschubkraft zumindest teilweise durch das Eigengewicht der Verschlußklammern erzeugt wird.

4. Verfahren nach Anspruch 3 , **dadurch gekennzeichnet, daß** die zweite Vorschubkraft zumindest teilweise durch das Eigengewicht der Verschlußklammern erzeugt wird.

5. Verfahren nach Anspruch 1 bis 4, **dadurch gekennzeichnet, daß** die Klammerriegel bei der Bildung des Vorrats in ein bis auf eine Austrittsöffnung im wesentlichen geschlossenes Gehäuse eingesetzt werden, welches unmittelbar über der Wendeeinrichtung befestigt wird.

6. Verfahren nach Anspruch 5, **dadurch gekennzeichnet, daß** die an der Austrittsöffnung des Vorratsbehälters befindlichen ersten paarweise zusammengefaßten Klammerriegel durch geeignete Stellmittel gehalten und von diesen entsprechend der Stellung der Wendeeinrichtung jeweils getrennt freigegeben werden.

7. Verfahren nach Anspruch 6, **dadurch gekennzeichnet, daß** die Klammerriegel durch eine dritte Vorschubkraft, die wenigstens teilweise durch das Eigengewicht der Klammern erzeugt wird, zu der Austrittsöffnung des Vorratsbehälters gefördert werden.

8. Verfahren nach Anspruch 7, **dadurch gekennzeichnet, daß** die Klammerriegel ohne Unterbrechung nacheinander zu der Schließeinrichtung durch die zweite Vorschubkraft gefördert werden.

9. Verfahren nach Anspruch 8, **dadurch gekennzeichnet, daß** die durch die zweite Vorschubkraft zu der Schließeinrichtung geförderten Riegel gegen Rückwärtsbewegung gehalten werden.

10. Verfahren nach Anspruch 1 bis 9, **dadurch gekennzeichnet, daß** die Wendeeinrichtung, die Stellmittel und die erste und die zweite Vorschubkraft in Abhängigkeit eines Signalgebers, der der Schließeinrichtung zugeordnet ist, gesteuert werden.

11. Verfahren nach einem der Ansprüche 1 bis 10, **dadurch gekennzeichnet** , daß die Klammern jedes Riegels vor dem Zusammenlegen der Riegel zum Vorrat in an sich bekannter Weise durch wenigstens einen Klebestreifen miteinander verbunden werden.

12. Vorratsbehälter für Verschlußklammern zur Verwendung beim Verschließen schlauchförmiger Verpackungen, insbesondere Wursthüllen, bestehend aus einem transportablen Gehäuse mit parallelen Seitenwänden, **dadurch gekennzeichnet,** daß der Abstand der Seitenwände (16, 18) zueinander mindestens der Breite zusätzlich der Drahtstärke einer U-förmigen Klammer (2) entspricht, wobei diese Seitenwände (16, 18) im Bereich der Austrittsöffnung (14) zwei nach außen wegklappbare Laschen (20, 22) besitzen, deren freie Endkanten mit jeweils einer Abschrägung (24, 26) versehen sind, und die Laschen an ihren Innenseiten Stützflächen (28, 29) besitzen, auf denen der erste Klammerriegel während des Transportes aufliegt.

13. Vorratsbehälter nach Anspruch 12, **dadurch gekennzeichnet**, daß die Laschen (20, 22) so ausgebildet sind, daß der Vorratsbehälter (10) nur einmal verwendbar ist.

14. Vorrichtung zum Verschließen - schlauchförmiger Verpackungen, insbesondere Wursthüllen, durch Verschlußklammern, die eine diese um die zusammengeschnürte Verpackung liegende Schließeinrichtung und einen Vorratsbehälter für die zu Riegeln zusammengefaßten Verschlußklammern aufweist, **dadurch gekennzeichnet**, daß sich zwischen dem Vorratsbehälter (10) und der Schließeinrichtung eine Wendeeinrichtung (30) befindet, deren Einlaßöffnung (32) unmittelbar an die Austrittsöffnung (14) des Vorratsbehälters (10) anschließt und an deren Auslaßöffnung (34) sich ein Stetig förderer (50) befindet, der die durch die Wendeeinrichtung (30) geführten Klammerriegel (4) zu der Schließeinrichtung fördert, und daß sich jeweils an den beiden Stirnseiten des Vorratsbehälters (10) im Bereich seiner Austrittsöffnung (14) Stellmittel (62, 64, 66, 68, 70, 72, 74, 76) befinden, die die Klammerriegel (4) im Vorratsbehälter (10) zurückhalten und diese in Abhängigkeit der Stellung der Wendeeinrichtung (30) einzeln zu dieser freigeben.

15. Vorrichtung nach Anspruch 14, **dadurch gekennzeichnet,** daß die Wendeeinrichtung (30) an einem die Ein-und Auslaßöffnungen (32 bzw. 34) enthaltenden gehäuseartigen Körper und in einer Bohrung des Körpers (37) gelagerten und zwischen ihren Enden diametral geschlitzten Walze (36) besteht, die auf ihrer Mantelfläche zwei diametral gegenüberliegende Aufnahmen (38, 40) besitzt, deren Länge und Breite ebenso wie der durchgehende Schlitz (42) der Länge und Breite eines Klammerriegels (4) entsprechen.

16. Vorrichtung nach Anspruch 15, **dadurch gekennzeichnet,** daß die Einlaßöffnung (32) des Körpers (37) mindestens eine Einführschräge (44) besitzt.

17. Vorrichtung nach Anspruch 16, **dadurch gekennzeichnet,** daß sich an die Einlaßöffnung (32) des Körpers (37) zwei beiderseitig von dieser Öffnung (32) angebrachte nach außen verlaufende Abschrägungen (46, 48) befinden, die in einem solchen Abstand zueinander angebracht sind, daß beim Aufsetzen des Vorratsbehälters (10) dessen Laschen (20, 22) nach außen geklappt werden.

18. Vorrichtung nach Anspruch 17, **dadurch gekennzeichnet,** daß die Walze (36) der Wendeeinrichtung (30) antriebsmäßig mit einem Schrittschaltantrieb (80) verbunden ist.

19. Vorrichtung nach Anspruch 14 bis 18, **dadurch gekennzeichnet,** daß die Stellmittel (62, 64, 66, 68, 70, 72, 74, 76) an jeder Stirnseite des Vorratsbehälters (10) aus jeweils zwei auf Achsen (74) gelagerten hakenförmigen Armen (62, 64) bestehen, die über ein druckmittelbetriebenes Gestänge (70, 72) mit den korrespondierenden Armen (66, 68) der gegenüberliegenden Stirnseite verbunden sind.

20. Vorrichtung nach Anspruch 14 bis 19, **dadurch gekennzeichnet,** daß ein Endlosband (52) des Stetigförderers (50) mit zwei Mitnehmern (54, 56) versehen ist, deren Abstand zueinander der Länge eines Klammerriegels (4) entspricht.

Fig. 1

Fig. 2

Fig. 3

0 247 546

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 574 991 (THORSEN) * Spalte 4, Zeilen 7-57; Spalte 6, Zeile 39 - Spalte 7, Zeile 22; Figuren 1-11 * | 1-4 | B 65 B 51/04 A 22 C 11/12 |
| Y | | 11 | |
| A | | 14 | |
| | --- | | |
| Y | EP-A-0 094 115 (VAN DIJK) * Zusammenfassung * | 11 | |
| | --- | | |
| D,A | AT-B- 330 003 (JANSSON) * Anspruch 1; Figuren 1-3 * | 1 | |
| | --- | | RECHERCHIERTE SACHGEBIETE (Int. Cl.4) |
| A | GB-A-1 338 394 (ASSOCIATED BISCUITS) * Seite 2, Zeilen 57-111; Figur 1 * | 9,14 | B 65 B A 22 C B 25 C B 27 F |
| | --- | | B 65 G |
| A | US-A-2 630 221 (STEWART) * Spalte 6, Zeilen 33-67; Figur 1 * | 15 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 25-08-1987 | CLAEYS H.C.M. |